# EUROPEAN PATENT SPECIFICATION

(11) **EP 4 376 601 B1**
(45) Date of publication and mention of the grant of the patent: **01.10.2025**
(21) Application number: 22762151.3
(22) Date of filing: 27.07.2022
(51) Int. Cl.: A01K 31/16

(54) **CONVEYING SYSTEM AND METHOD FOR TRANSPORTING EGGS**
FÖRDERSYSTEM UND VERFAHREN ZUM TRANSPORTIEREN VON EIER
SYSTÈME DE CONVOYAGE ET MÉTHODE POUR TRANSPORTER DES OEUFS

(30) Priority: 27.07.2021 NL 2028851
(43) Date of publication of application: 05.06.2024
(73) Proprietor: Van de Ven Beheer B.V., 5521 DZ Eersel (NL)
(72) Inventor: KUIJKEN, Ronald, 5571 KP Bergeijk (NL)
(74) Representative: Verhees, Godefridus Josephus Maria
(86) International application number: PCT/NL2022/050446
(87) International publication number: WO 2023/009001

(56) References cited:
- WO-A2-2011/119825
- DE-A1- 4 124 633

## Description

### Technical field of the invention

The invention relates to a conveying system for transporting eggs from several laying locations to a processing location, comprising:
- a main transport track extending along the laying locations up to the processing location, for moving eggs from the laying locations to the processing location, and
- displacing means for taking the eggs from the laying locations and placing the eggs on the main transport track.

At the processing location, for example, the eggs are checked and the eggs that have been found to be good are packed, for example placed in an egg tray. The eggs found to be less good or bad are removed. If bad eggs are regularly found, it is desirable to find out the cause of it. This is labour-intensive because all known parameters and laying locations have to be checked for deviations.

### Background of the invention

A conveying system according to the preamble of claim 1 is known from DE 41 24 633 A1. The quality of eggs provides a lot of information about various factors that occur in the production process of an egg, including health / behavior of the animals, quality of the equipment. In today's production process, eggs are packed in a central location and there is no direct link to the location where the egg was actually produced. Damage that an egg incurs in the process from laying to packaging can often not be traced to the cause.

In most cases eggs come out on a central transport track (main transport track) which centralizes the eggs from different production systems from the shed and possibly from several sheds to one position. There is thus a central discharge track (main transport track) on which several system belts (auxiliary transport tracks) place eggs. If a poultry farmer can act more quickly on disruptions in the production process, this will benefit the total return.

### Summary of the invention

An object of the invention is to provide a conveying system according to the preamble of claim 1, wherein determining the cause of the bad eggs can be simplified. To this end, the conveying system according to the invention is characterized in that it furthermore comprises origin determining means for determining, at the location of the processing location and on the basis of the time of arrival at the processing station (7), the laying location from which the eggs, which are arriving at that time at the processing location, originate.

The main transport track can for instance be one or more connected transport belts or transport chains and/or tracks of driven transport rollers located one behind the other at short mutual distances, over which eggs can be moved. By finding the laying location from where bad eggs originate, the cause of these bad eggs can be searched more specifically.

An embodiment of the conveying system according to the invention is further characterized in that:
- the displacing means are designed such that at each laying location they place the eggs on a strip of the main transport track, said strip being selected in the width direction of the main transport track for that laying location at that moment, wherein the selected position of the strip in the width direction of the main transport track is recorded, and
- the origin determining means determine the location of the strip, in the width direction of the main transport track, in which the eggs arriving at the processing location are located and on the basis of this and the recorded position determine the laying location from where these eggs originate.

At each laying location, the eggs can always be placed on the same strip on the main transport track corresponding to that laying location, or a strip can be selected in each case, so that the location of the assigned strip thus can vary.

The strip of the main transport track mentioned here need not be marked on the main transport track if it is, for instance, designed as a transport belt. If the transport track is designed as a wide chain, vertically projecting strips can be present on its links, which strips form a boundary of the strips.

A further embodiment of the conveying system according to the invention is further characterized in that the origin determination means also record the speed of the main transport track in time, so that therewith and with the known distance between the laying location and the processing location, the time can be determined at which the eggs are taken from the laying location and placed on the main transport track.

Yet another embodiment of the conveying system according to the invention is further characterized in that:
- the origin determining means register the time at which the eggs, at a specific laying location, are placed on the main transport track, and
- the origin determining means register the time at which the eggs arrive at the processing location.

In this case, the eggs can be placed on the main transport track at an arbitrary location in the width direction of the main transport track.

Preferably, the origin determining means also record the speed of the main transport track in time (or the displaced distance in time), so that the time can be determined at which the eggs, that are placed on the main transport track at a laying location, arrive at the processing location or that the laying location can be determined from where the eggs arriving at a time at the processing location originate.

The displacing means preferably comprise displaceable guides for guiding the eggs from the laying locations to one of the strips on the main transport track at a predetermined distance from a side edge of the transport means. At the laying locations, the guides are preferably pivotally connected at one end to frames present next to the transport means and can be rotated from an inactive position next to the transport means to an active position above the transport means.

A further embodiment of the conveying system according to the invention is further characterized in that the conveying system further comprises control means at the processing location and/or elsewhere in or along the main transport path, for checking the eggs.

These control means can, for example, be leak detection means that are present over the entire width of the main transport track or one or more (heat-sensitive) cameras.

If a bad egg is detected at the processing location, the origin determination means can be used to find out from which laying location this egg came. This saves a lot of research. Further investigation can then be carried out at this laying location to determine the cause of the bad egg.

An embodiment of the conveying system according to the invention is further characterized in that the displacing means comprise auxiliary transport tracks for moving the eggs from one or more laying places within the laying locations to the main transport track.

The invention also relates to a method according to claim 10 for transporting eggs from various laying locations to a processing location, comprising:
- at the location of the laying locations, placing the eggs on the main transport track,
- moving the eggs from the laying locations to the processing location by means of the main transport track,
- at the location of the processing location, on the basis of the position on the main transport track on which the eggs are placed at a laying location and/or on the basis of the time of arrival and the times on which the eggs are placed at the laying locations on the main transport track, determine from which laying location the eggs that arrive at the processing location originate.

An embodiment of the method according to the invention is further characterized in that at one of the laying locations when the eggs are placed on the transport track, a position in the width direction of the main transport track where the eggs will be placed on the main transport track is selected, and that upon arrival of eggs at the processing location, the position of the eggs in width direction on the main transport track is determined and on the basis thereof the laying location from which the eggs originate is determined.

A further embodiment of the method according to the invention is further characterized in that the speed of the main transport track is determined in time and with this and with the known distance between the laying location and the processing location, the point in time is determined at which the eggs have been taken from the laying location and placed on the main transport track.

Yet another embodiment of the method according to the invention is further characterized in that at the laying locations the points in time at which the eggs are placed on the main transport track are recorded and the displacement of the main transport track in time is recorded and on the basis of the time differences between the time of arrival of eggs at the processing location and the points in time when the eggs are placed on the main transport track and on the basis of the recorded displacement of the main transport track in time, the laying location is determined where these eggs are placed on the main transport track.

### Brief description of the drawings

The invention will be further elucidated below on the basis of drawings in which embodiments of the conveying system according to the invention are shown. Wherein:
Figure 1 is a schematic representation of a first embodiment of the conveying system according to the invention, in which the location of origin is determined on the basis of the position in the transport track;
Figure 2 is a schematic representation of a second embodiment of the conveying system according to the invention, wherein the conveying system is present in one poultry house;
Figure 3 is a schematic representation of a third embodiment of the conveying system according to the invention, in which the location of origin is determined on the basis of the time difference between placing in the transport track and arrival at the processing location.

### Detailed description of the drawings

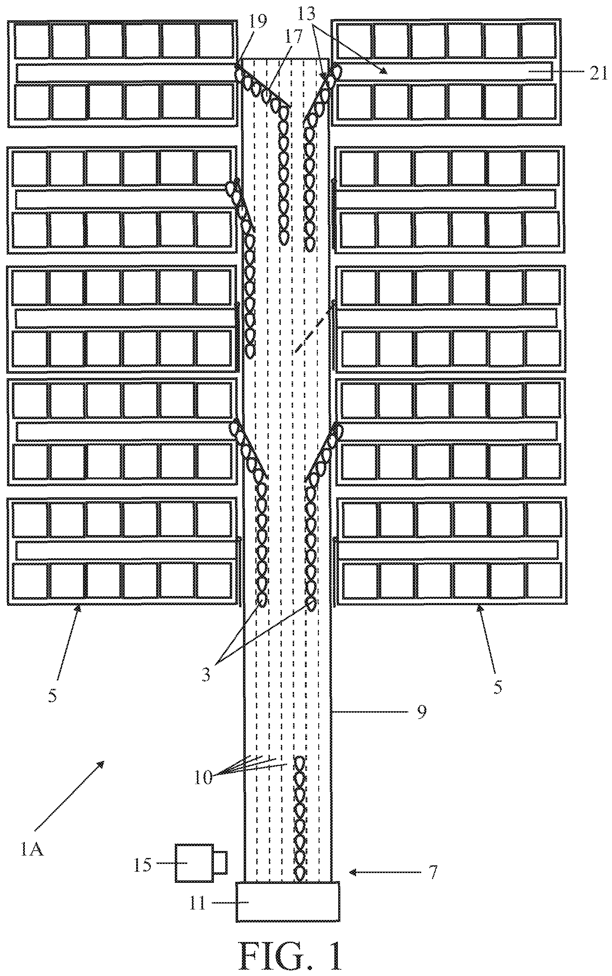

Figure 1 shows schematically a first embodiment of the conveying system according to the invention. The conveying system 1A has a main transport track 9 for moving eggs 3. This main transport track 9 extends along a number of laying locations 5 to a processing location 7 where the eggs 3 can for instance be sorted and packed. Herein the laying locations 5 are formed by poultry houses.

The conveying system 1A furthermore has displacing means 13 for taking the eggs 3 from the laying locations 5 and placing them on the main transport track 9. These displacing means 13 have auxiliary transport tracks 21 located in the stables, which run between laying places 23 where chickens lay eggs. The displacing means 13 furthermore have rotatable guides 17 which can guide the eggs to a selected strip 10 on the main transport track 9. The guides 17 are, for instance, designed as sloping gutters so that the eggs 3 roll from the laying locations 5 onto the main transport track 9 under the influence of gravity.

At the processing location 7, the conveying system 1A is provided with origin determining means 11 for determining the laying location 5 from which the eggs 3 that arrive at the processing location 7 at that moment originate. These origin determining means 11 detect the position of the strip 10 in width direction of the main transport track 9 in which the eggs 3 arriving at the processing location 7 are located. On the basis of this and on the basis of the recorded selected position of the strip 10 at the location of the laying location 5, it is determined where these eggs 3 come from.

The origin determining means 11 also record the speed of the main transport track 9 in time or record the distance over which the main transport track 9 moves in time, so that thereby and with the known distance between the laying location 5 and the processing location 7, the time can be determined on which the eggs 3 are taken from the laying location 5 and placed on the main transport track 9.

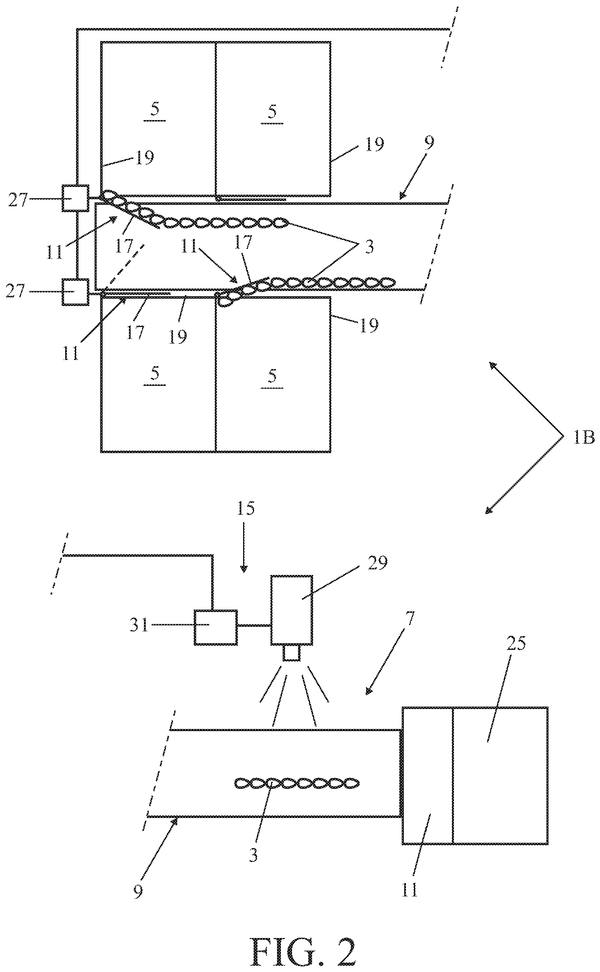

Figure 2 shows schematically a second embodiment of the conveying system according to the invention. All parts similar to those of the above-described first embodiment are denoted by the same reference numerals. This conveying system 1B moves eggs 3 in a poultry house from various laying locations 5 to a processing location 7. At the processing location, the eggs are checked and packaging means 25 are present to package the good eggs. The bad eggs are removed by machine (not shown).

The main transport track 9 can be designed as a transport belt or can be formed by a track of rollers being one behind the other, which rollers are driven so that the eggs move over the rollers. Here too, the main transport track 9 extends along the laying locations 5 up to the processing location 7.

Displacement means 11 are present at the location of the laying locations 5 for placing the eggs 3 on the main transport track 9. The moving means 11 here also have displaceable guides 17 for guiding the eggs 3 from the laying locations 5 to a location on the main transport track 9 at a certain distance from a side edge of the transport means. The laying locations 5 are preferably provided with sloping gutters so that the eggs roll under the influence of gravity along the guides on the main transport track. The guides 17 are pivotally connected with one end to frames 19 present next to the main transport track 9 and can be rotated from an inactive position next to the main transport track 9 to an active position above the main transport track 9.

Registration means 27 are present at the laying locations, which register the location of the laying location and the start and end times at which eggs are taken from the laying location and placed onto the main transport track. The position of the guides is also registered, from which the position in width direction of the main transport track can be derived where the eggs are placed on the main transport track. Control means 15 are present at the location of the processing location 7, which check the eggs 3 and register the condition and point in time of the checked eggs. The location in the width direction of the transport means 9 where the checked eggs 3 are located is also registered. To this end, the control means 15 are equipped with a camera 29 and further registration means 31.

If a bad egg is detected by the control means at the processing location, it can be determined on the basis of the position in width direction on the belt and the transport speed at which laying location that egg is placed on the transport means and this laying location can be examined for any imperfections.

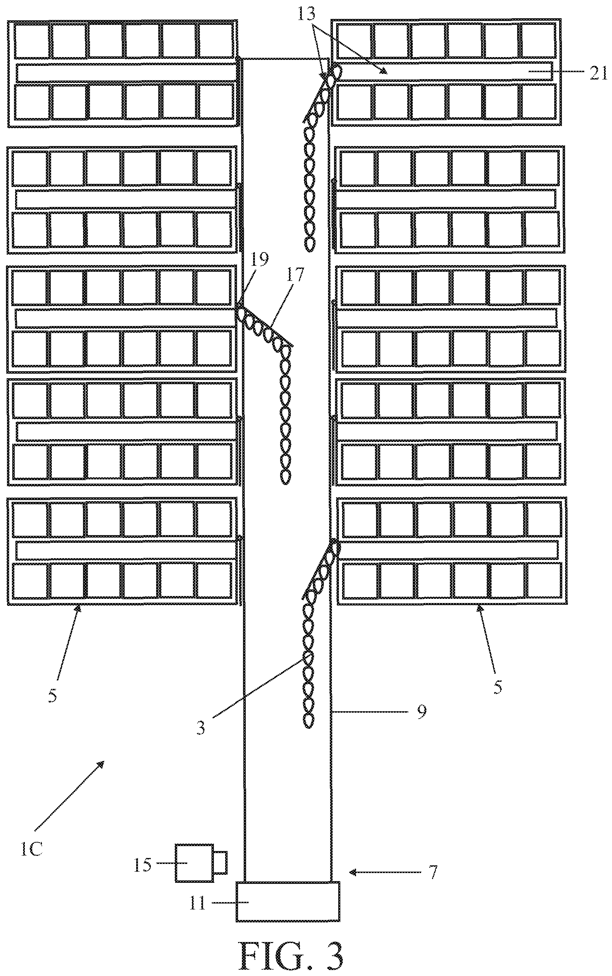

Figure 3 shows schematically a third embodiment of the conveying system according to the invention. All parts similar to those of the above-described first embodiment are denoted by the same reference numerals. The conveying system 1C again has a main transport track 9 which extends along a number of laying locations 5 to a processing location 7. The laying locations 5 are again formed by poultry houses.

The difference with the first embodiment is that it is not the position of the eggs 3 on the main transport track 9 that determines the origin of the eggs arriving at the processing location 7, but the point in time at which the eggs 3 are placed on the main transport track 9 at a laying location 5.

The origin determining means 11 register the point in time at which the eggs 3 are placed on the main transport track 9 at a specific laying location 5 and the point in time at which the eggs 3 arrive at the processing location 7. The origin determining means 11 also record the speed of the main transport track 9 in time or the distance the main transport track 9 moves in time. On the basis of this registered data, it can be determined at what point in time the eggs 3 which are placed at a laying location 5 on the main transport track 9 arrive at the processing location 7 or from which laying location 5 the eggs 3 arriving at a point of time at the processing location 7 originate.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Conveying system (1A-C), for transporting eggs (3) from several laying locations (5) to a processing location (7), comprising:
- a main transport track (9) extending along the laying locations (5) up to the processing location (7), for moving eggs (3) from the laying locations (5) to the processing location (7), and
- displacing means (13) for taking the eggs (3) from the laying locations (5) and placing the eggs (3) on the main transport track (9),
**characterized in that** the conveying system (1A-C) furthermore comprises origin determining means (11) for determining, at the location of the processing location (7) and on the basis of the time of arrival at the processing station (7), the laying location (5) from which the eggs (3), which are arriving at that time at the processing location (7), originate.

2. Conveying system (1A-B) according to claim 1, **characterized in that**:
- the displacing means (13) are designed such that at each laying location (5) they place the eggs (3) on a strip (10) of the main transport track (9), said strip (10) being selected in the width direction of the main transport track (9) for that laying location at that moment, wherein the selected position of the strip (10) in the width direction of the main transport track (9) is recorded, and
- the origin determining means (11) determine the location of the strip (10), in the width direction of the main transport track (9), in which the eggs (3) arriving at the processing location (7) are located and on the basis of this and the recorded position determine the laying location (5) from where these eggs (3) originate.

3. Conveying system (1A-B) according to claim 2, **characterized in that** the origin determination means (11) also record the speed of the main transport track (9) in time, so that therewith and with the known distance between the laying location (5) and the processing location (7), the time can be determined at which the eggs (3) are taken from the laying location (5) and placed on the main transport track (9).

4. Conveying system (1C) according to claim 1, **characterized in that** :
- the origin determining means (11) register the time at which the eggs (3), at a specific laying location (5), are placed on the main transport track (9), and
- the origin determining means (11) register the time at which the eggs (3) arrive at the processing location (7).

5. Conveying system (1C) according to claim 4, **characterized in that** the origin determining means (11) also record the speed of the main transport track (9) in time, so that the time can be determined at which the eggs (3), that are placed on the main transport track (9) at a laying location (5), arrive at the processing location (7) or that the laying location (5) can be determined from where the eggs (3) arriving at a time at the processing location (7) originate.

6. Conveying system (1A-C) according to any one of the preceding claims, **characterized in that** the displacing means (13) comprise displaceable guides (17) for guiding the eggs (3) from the laying locations (5) to one of the strips (10) on the main transport track (9).

7. Conveying system (1A-C) according to claim 6, **characterized in that** at the location of the laying locations (5) the guides (17) are hinged at one end to frames (19) located next to the main transport track (9) and can be turned from an inactive position next to the main transport track (9) to an active position above the main transport track (9).

8. Conveying system (1A-C) according to any one of the preceding claims, **characterized in that** the conveying system further comprises control means (15) at the processing location (7) and/or elsewhere in or along the main transport track (9), for checking of the eggs (3).

9. Conveying system (1A-B) according to any one of the preceding claims, **characterized in that** the displacing means comprise auxiliary transport tracks (21) for moving the eggs (3) from one or more laying places within the laying locations (5) to the main transport track ( 9).

10. Method for transporting eggs (3) from various laying locations (5) to a processing location (7) using the conveying system as claimed in any of the preceding claims, comprising:
- at the location of the laying locations (5), placing the eggs (3) on the main transport track (9),
- moving the eggs (3) from the laying locations (5) to the processing location (7) by means of the main transport track (9),
- at the location of the processing location (7), on the basis of the position on the main transport track (9) on which the eggs (3) are placed at a laying location (5) and/or on the basis of the time of arrival and the times on which the eggs (3) are placed at the laying locations (5) on the main transport track (9), and using the origin determining means (11), determine from which laying location (5) the eggs (3) that arrive at the processing location (7) originate.

11. Method according to claim 10, **characterized in that** at one of the laying locations (5) when the eggs (3) are placed on the transport track, a position in the width direction of the main transport track (9) where the eggs (3) will be placed on the main transport track (9) is selected, and that upon arrival of eggs (3) at the processing location (7), the position of the eggs (3) in width direction on the main transport track (9) is determined and on the basis thereof the laying location (5) from which the eggs (3) originate is determined.

12. Method according to claim 11, **characterized in that** the speed of the main transport track (9) is determined in time and with this and with the known distance between the laying location (5) and the processing location (7), the point in time is determined at which the eggs (3) have been taken from the laying location (5) and placed on the main transport track (9).

13. Method according to claim 10, 11 or 12, **characterized in that** at the laying locations (5) the points in time at which the eggs (3) are placed on the main transport track (9) are recorded and the displacement of the main transport track (9) in time is recorded and on the basis of the time differences between the time of arrival of eggs (3) at the processing location (7) and the points in time when the eggs (3) are placed on the main transport track (9) and on the basis of the recorded displacement of the main transport track (9) in time, the laying location (5) is determined where these eggs (3) are placed on the main transport track (9).

## Patentansprüche

1. Fördersystem (1A-C) zum Transport von Eiern (3) von mehreren Legeplätzen (5) zu einem Verarbeitungsort (7), umfassend:
- eine Haupttransportbahn (9), die sich entlang der Legeplätze (5) bis zum Verarbeitungsort (7) erstreckt und die Eier (3) von den Legeplätzen (5) zum Verarbeitungsort (7) transportiert, und
- Verschiebemittel (13) zum Abnehmen der Eier (3) von den Legeplätzen (5) und zum Ablegen auf der Haupttransportbahn (9),
**dadurch gekennzeichnet, dass** das Fördersystem (1A-C) außerdem Herkunftsbestimmungsmittel (11) umfasst, um am Ort des Verarbeitungsorts (7) anhand der Ankunftszeit am Verarbeitungsort (7) den Legeplatz (5) zu bestimmen, von dem die Eier (3), die zu diesem Zeitpunkt am Verarbeitungsort (7) ankommen, stammen.

2. Fördersystem (1A-B) nach Anspruch 1, **dadurch gekennzeichnet, dass**:
- die Verschiebemittel (13) so ausgelegt sind, dass sie an jedem Legeplatz (5) die Eier (3) auf einem Streifen (10) der Haupttransportbahn (9) ablegen, der in Breitenrichtung der Haupttransportbahn (9) für den jeweiligen Legeplatz ausgewählt ist, wobei die ausgewählte Position des Streifens (10) in Breitenrichtung der Haupttransportbahn (9) aufgezeichnet wird, und
- die Ursprungsbestimmungsmittel (11) die Position des Streifens (10) in Breitenrichtung der Haupttransportbahn (9) bestimmen, in dem sich die am Verarbeitungsort (7) ankommenden Eier (3) befinden, und anhand dieser und der aufgezeichneten Position den Legeplatz (5) bestimmen, von dem diese Eier (3) stammen.

3. Fördersystem (1A-B) nach Anspruch 2, **dadurch gekennzeichnet, dass** die Ursprungsbestimmungsmittel (11) auch die Geschwindigkeit der Haupttransportbahn (9) zeitlich erfassen, sodass damit und bei bekannter Entfernung zwischen Legeplätze (5) und Verarbeitungsort (7) der Zeitpunkt bestimmt werden kann, zu dem die Eier (3) vom Legeplatz (5) entnommen und auf die Haupttransportbahn (9) abgelegt werden.

4. Fördersystem (1C) nach Anspruch 1, **dadurch gekennzeichnet, dass**:
- die Ursprungsbestimmungsmittel (11) den Zeitpunkt erfassen, zu dem die Eier (3) an einem bestimmten Legeplatz (5) auf die Haupttransportbahn (9) abgelegt werden, und
- die Ursprungsbestimmungsmittel (11) den Zeitpunkt erfassen, zu dem die Eier (3) am Verarbeitungsort (7) ankommen.

5. Fördersystem (1C) nach Anspruch 4, **dadurch gekennzeichnet, dass** die Ursprungsbestimmungsmittel (11) auch die Geschwindigkeit der Haupttransportbahn (9) zeitlich erfassen, so dass der Zeitpunkt bestimmt werden kann, zu dem die an einem Legeplatz (5) auf der Haupttransportbahn (9) abgelegten Eier (3) am Verarbeitungsort (7) ankommen oder dass der Legeplatz (5) bestimmt werden kann, von dem die zu einem bestimmten Zeitpunkt am Verarbeitungsort (7) ankommenden Eier (3) stammen.

6. Fördersystem (1A-C) nach einem der vorhergehenden Ansprüche, **dadurch gekennzeichnet, dass** die Verschiebemittel (13) verschiebbare Führungen (17) umfassen, um die Eier (3) von den Legeplätzen (5) zu einem der Streifen (10) auf der Haupttransportbahn (9) zu führen.

7. Fördersystem (1A-C) nach Anspruch 6, **dadurch gekennzeichnet, dass** die Führungen (17) an den Legeplätzen (5) an einem Ende an Rahmen (19) neben der Haupttransportbahn (9) angelenkt sind und von einer inaktiven Position neben der Haupttransportbahn (9) in eine aktive Position oberhalb der Haupttransportbahn (9) gedreht werden können.

8. Fördersystem (1A-C) nach einem der vorhergehenden Ansprüche, **dadurch gekennzeichnet, dass** das Fördersystem zusätzlich Kontrollmittel (15) am Verarbeitungsort (7) und/oder an anderer Stelle in oder entlang der Haupttransportbahn (9) zur Kontrolle der Eier (3) umfasst.

9. Fördersystem (1A-B) nach einem der vorhergehenden Ansprüche, **dadurch gekennzeichnet, dass** die Verschiebemittel Hilfstransportbahnen (21) zum Bewegen der Eier (3) von einem oder mehreren Legeplätzen innerhalb der Legeplätze (5) zur Haupttransportbahn (9) umfassen.

10. Verfahren zum Transport von Eiern (3) von verschiedenen Legeplätzen (5) zu einem Verarbeitungsort (7) unter Verwendung des Fördersystems nach einem der vorhergehenden Ansprüche, umfassend:
- Ablegen der Eier (3) am Standort der Legeplätze (5) auf der Haupttransportbahn (9),
- Bewegen der Eier (3) von den Legeplätzen (5) zum Verarbeitungsort (7) mittels der Haupttransportbahn (9),
- Bestimmen des Herkunftsorts (7) anhand der Position auf der Haupttransportbahn (9), an der die Eier (3) an einem Legeplatz (5) abgelegt werden, und/oder anhand der Ankunftszeit und der Zeitpunkte, zu denen die Eier (3) an den Legeplätzen (5) auf der Haupttransportbahn (9) abgelegt werden, und mithilfe der Herkunftsbestimmungseinrichtung (11), von welchem Legeplatz (5) die am Verarbeitungsort (7) ankommenden Eier (3) stammen.

11. Verfahren nach Anspruch 10, **dadurch gekennzeichnet, dass** an einem der Legeplätze (5) beim Ablegen der Eier (3) auf die Transportbahn eine Position in Breitenrichtung der Haupttransportbahn (9) ausgewählt wird, an der die Eier (3) auf der Haupttransportbahn (9) abgelegt werden, und dass bei Ankunft der Eier (3) am Verarbeitungsort (7) die Position der Eier (3) in Breitenrichtung auf der Haupttransportbahn (9) ermittelt wird und auf dieser Grundlage der Legeplatz (5) bestimmt wird, von dem die Eier (3) stammen.

12. Verfahren nach Anspruch 11, **dadurch gekennzeichnet, dass** die Geschwindigkeit der Haupttransportbahn (9) zeitlich bestimmt wird und damit und bei bekannter Entfernung zwischen Legeplatz (5) und Verarbeitungsort (7) der Zeitpunkt ermittelt wird, zu dem die Eier (3) vom Legeplatz (5) entnommen und auf die Haupttransportbahn (9) abgelegt wurden.

13. Verfahren nach Anspruch 10, 11 oder 12, **dadurch gekennzeichnet, dass** an den Legeorten (5) die Zeitpunkte der Ablage der Eier (3) auf der Haupttransportbahn (9) und die zeitliche Verschiebung der Haupttransportbahn (9) erfasst werden und anhand der Zeitdifferenzen zwischen der Ankunftszeit der Eier (3) am Verarbeitungsort (7) und den Zeitpunkten der Ablage der Eier (3) auf der Haupttransportbahn (9) sowie der erfassten zeitlichen Verschiebung der Haupttransportbahn (9) der Legeplatz (5) ermittelt wird, an dem diese Eier (3) auf der Haupttransportbahn (9) abgelegt werden.

## Revendications

1. Sysème de transport (1A-C) pour le transport d'œufs (3) depuis plusieurs postes de ponte (5) vers un poste de transformation (7), comprenant :
- une voie de transport principale (9) sétendant le long des postes de ponte (5) jusqu'au poste de transformation (7), pour acheminer les œufs (3) des postes de ponte (5) vers le poste de transformation (7), et
- des moyens de déplacement (13) pour prélever les œufs (3) des postes de ponte (5) et les placer sur la voie de transport principale (9).
**caractérisé en ce que** le système de transport (1A-C) comprend en outre des moyens de détermination de l'origine (11) pour déterminer, à l'emplacement du poste de transformation (7), et en fonction de l'heure d'arrivée au poste de transformation (7), le poste de ponte (5) d'où proviennent les œufs (3) arrivant à ce moment au poste de transformation (7).

2. Sysème de transport (1A-B) selon la revendication 1, **caractérisé en ce que** :
- les moyens de déplacement (13) sont conçus pour déposer les œufs (3) à chaque poste de ponte (5) sur une bande (10) de la voie de transport principale (9), cette bande (10) étant sélectionnée dans le sens de la largeur de la voie de transport principale (9) pour ce point de ponteàce moment précis, la position sélectionnée de la bande (10) dans le sens de la largeur de la voie de transport principale (9) est enregistrée ; et
- les moyens de dtermination de l'origine (11) déterminent l'emplacement de la bande (10), dans le sens de la largeur de la voie de transport principale (9), où se trouvent les œufs (3) arrivant au point de traitement (7) et, sur la base de cette position et de la position enregistrée, déterminent le poste de ponte (5) d'où proviennent ces œufs (3).

3. Sysème de transport (1A-B) selon la revendication 2, **caractérisé en ce que** le moyen de dtermination de l'origine (11) enregistre également la vitesse de la voie de transport principale (9) au fil du temps, de sorte que, grâce à cette vitesse etàla distance connue entre le poste de ponte (5) et le lieu de traitement (7), il est possible de déterminer l'heure à laquelle les œufs (3) sont prélevés du poste de ponte (5) et placés sur la voie de transport principale (9).

4. Sysème de transport (1C) selon la revendication 1, **caractérisé en ce que** :
- le moyen de détermination de l'origine (11) enregistre l'heure à laquelle les œufs (3), àun poste de ponte spécifique (5), sont placés sur la voie de transport principale (9), et
- le moyen de détermination de l'origine (11) enregistre l'heure à laquelle les œufs (3) arrivent au lieu de traitement (7).

5. Sysème de transport (1C) selon la revendication 4, **caractérisé en ce que** les moyens de détermination de l'origine (11) enregistrent également la vitesse de la voie de transport principale (9) dans le temps, de sorte que l'heure d'arrivée des œufs (3) placés sur la voie de transport principale (9) à un poste de ponte (5) au point de traitement (7) puisse être détermirée, ou que le poste de ponte (5) puisse être déterminé d'où proviennent les œufs (3) arrivantàce point de traitement (7).

6. Sysème de transport (1A-C) selon l'une quelconque des revendications précédentes, caractrié en ce que les moyens de déplacement (13) comprennent des guides déplaçables (17) pour guider les œufs (3) depuis les points de ponte (5) vers l'une des bandes (10) de la voie de transport principale (9).

7. Sysème de transport (1A-C) selon la revendication 6, **caractérisé en ce qu'**au niveau des postes de ponte (5), les guides (17) sont articulésà une extrémité sur des cadres (19) situés à proximité de la voie de transport principale (9) et peuvent être tournés d'une position inactive à proximité de la voie de transport principale (9)àune position active au-dessus de cette voie.

8. Sysème de transport (1A-C) selon l'une quelconque des revendications précédentes, **caractérisé en ce qu'**il comprend en outre des moyens de contrôle (15) au niveau du poste de traitement (7) et/ou ailleurs sur ou le long de la voie de transport principale (9), pour le contrôle des œufs (3).

9. Sysème de transport (1A-B) selon l'une quelconque des revendications précédentes, **caractérisé en ce que** les moyens de déplacement comprennent des voies de transport auxiliaires (21) pour déplacer les œufs (3) d'un ou plusieurs postes de ponte au sein des postes de ponte (5) vers la voie de transport principale (9).

10. Procédé de transport d'œufs (3) depuis différents postes de ponte (5) vers un lieu de traitement (7) à l'aide du sysème de transport selon l'une quelconque des revendications précédentes, comprenant :
- àl'emplacement des postes de ponte (5), placer les œufs (3) sur la voie de transport principale (9),
- déplacer les œufs (3) des postes de ponte (5) vers le lieu de traitement (7) au moyen de la voie de transport principale (9),
- àl'emplacement du lieu de traitement (7), en fonction de la position sur la voie de transport principale (9) à laquelle les œufs (3) sont placés à un poste de ponte (5) et/ou de l'heure d'arrivée et des heures de placement des œufs (3) aux postes de ponte (5) sur la voie de transport principale (9), et à l'aide du moyen de détermination de l'origine (11), déterminer de quel poste de ponte (5) proviennent les œufs (3) arrivant au lieu de traitement (7).

11. Procédé selon la revendication 10, caractérisé en ce quâ l'un des postes de ponte (5), lorsque les œufs (3) sont placés sur la voie de transport, une position dans le sens de la largeur de la voie de transport principale (9) où les œufs (3) seront placés sur la voie de transport principale (9) est sélectionnée, et quà l'arrivée des œufs (3)àl'emplacement de traitement (7), la position des œufs (3) dans le sens de la largeur sur la voie de transport principale (9) est déterminée et sur la base de celle-ci le poste de ponte (5) d'où proviennent les œufs (3) est déterminé.

12. Procédé selon la revendication 11, **caractérisé en ce que** la vitesse de la voie principale (9) est déterminée dans le temps, ce qui, compte tenu de la distance connue entre le poste de ponte (5) et le lieu de traitement (7), permet de déterminer le moment où les œufs (3) ontété prélevés du poste de ponte (5) et placés sur la voie principale (9).

13. Procédé selon la revendication 10, 11 ou 12, **caractérisé en ce qu'**aux postes de ponte (5), les instants auxquels les œufs (3) sont placés sur la voie de transport principale (9) sont enregistés et le déplacement de la voie de transport principale (9) dans le temps est enregistré et, sur la base des différences de temps entre le moment d'arrivée des œufs (3) au lieu de traitement (7) et les instants auxquels les œufs (3) sont placés sur la voie de transport principale (9) et sur la base du déplacement enregisté de la voie de transport principale (9) dans le temps, le poste de ponte (5) où ces œufs (3) sont placés sur la voie de transport principale (9) est déterminé.
